# EUROPEAN PATENT SPECIFICATION

(11) **EP 4 072 312 B1**
(45) Date of publication and mention of the grant of the patent: **27.09.2023**
(21) Application number: 20821100.3
(22) Date of filing: 11.12.2020
(51) Int. Cl.: A23L 5/30, C08B 37/00, C08B 37/08

(54) **EXTRACTION PROCESS FOR THE SIMULTANEOUS RECOVERY CHITOSAN AND BETA-GLUCAN FROM FUNGAL BIOMASS**
EXTRAKTIONSVERFAHREN ZUR GLEICHZEITIGEN GEWINNUNG VON CHITOSAN UND BETA-GLUCAN AUS PILZBIOMASSE
PROCÉDÉ D'EXTRACTION POUR LA RÉCUPÉRATION SIMULTANÉE DE CHITOSANE ET DE BETA-GLUCANE À PARTIR DE BIOMASSE FONGIQUE

(30) Priority: 12.12.2019 GB 201918327
(43) Date of publication of application: 19.10.2022
(73) Proprietor: Katholieke Universiteit Leuven, 3000 Leuven (BE)
(72) Inventor: APPELS, Lise, 2630 Aartselaar (BE); DEWIL, Raf, 3800 Sint-Truiden (BE); SWEYGERS, Nick, 3200 Aartschot (BE)
(74) Representative: Beck, Michaël Andries T.
(86) International application number: PCT/EP2020/085792
(87) International publication number: WO 2021/116426

(56) References cited:
- EP-A1- 1 550 674
- EP-A2- 2 007 817
- EP-B1- 1 550 674
- EP-B1- 2 007 817
- WO-A1-03/068824
- WO-A1-2013/053838
- US-A- 4 806 474
- US-A1- 2007 299 034
- PETROVA VALENTINA A ET AL: "O,N-(2-sulfoethyl)chitosan: Synthesis and properties of solutions and films", CARBOHYDRATE POLYMERS, APPLIED SCIENCE PUBLISHERS , LTD BARKING, GB, vol. 157, 21 October 2016 (2016-10-21), pages 866-874, XP029848671, ISSN: 0144-8617, DOI: 10.1016/J.CARBPOL.2016.10.058

## Description

### Background and Summary

### BACKGROUND OF THE INVENTION

### A. Field of the Invention

Present invention concerns microwave- and ultrasonic-assisted extraction of chitosan and β-glucan from fungi for instance from fungi of the genus Aspergillus, and preferably from *Aspergillus niger.*

B. Description of the Related Art EP 2007 817 A1 describes compositions and methods for manufacturing thereof, suitable for human or animal consumption. The glucosamine, N-acetylglucosamine and beta-glucan compositions are derived from fungal biomass containing chitin.

In a state of the art process, β-glucanase enzymes are applied to yield high purity chitosan (WO 03/068824). This process yields chitosan in solid form, but due to glucanase activity, the native β-glucan becomes soluble in water and thus cannot be obtained in solid form.

In another state of the art process (WO/2013/053838) isolation of β-glucan follows the steps described above without microwave- and ultrasonic-assistance. This has serious implications for the chemical process: (i) harsh reaction conditions such as high alkaline concentrations (up to 50 w%) and high temperature (120 °C) at long reaction times (up to 10 h) are required, (ii) due to high alkaline concentrations, numerous washing steps are required leading to the loss of chitosan and/or β-glucan.

The process of present invention overcomes the problems in the above stated patents by (i) yielding both solid chitosan and solid β-glucan in one process, (ii) without the need of enzymes, (iii) without high alkaline concentrations for instance lower than 50 w% , (iv) short reaction times and (v) less washing steps (thus less wastewater production) (vi) better separability, and (vii) yielding chitosan with a purity comparable to the process where enzymes are applied.

### SUMMARY OF THE INVENTION

In accordance with the purpose of the invention, as embodied and broadly described herein, the invention is broadly drawn to a method for isolation of a chitosan fraction and β-glucan fraction from fungal mass or a mass originating from a fungal mass, comprising, heating the fungal mass in contact with water and base or base precursor and subjecting this fungal mass to ultrasound treatment, the process further comprising a washing and separation step to remove the dissolved material from the mixture, the process further comprising contacting the mass with water and an acid or acid precursor, the process further comprising a washing and separation step to remove the dissolved material from the mixture, the process further comprising contacting the mass with water and a base or base precursor, heating it and subjecting it to microwave treatment, the process further comprising contacting the mass with water and an acid or acid precursor, the process further comprising separating the solid β-glucan fraction from the liquid that contains the chitosan solution and the process further comprising flocculating or precipitating of chitosan in the chitosan solution.

In one aspect of the invention, the invention also provides a method for isolation of a chitosan fraction and β-glucan fraction from fungal mass or a mass originating from a fungal mass, comprising heating the fungal mass in contact with water and base or base precursor and subjecting this fungal mass to ultrasound treatment, wherein the mass is heated to a temperature in a range between 40 to 70°C, the process further comprising a washing and separation step to remove the dissolved material from the mixture, the process further comprising contacting the mass with water and an acid or acid precursor to remove mineral fraction from the chitin glucan complex, the process further comprising a washing and separation step to remove the dissolved material from the mixture, the process further comprising contacting the mass with water and a base or base precursor, heating it and subjecting it to microwave treatment, wherein microwave-assisted deacetylation converts chitin to chitosan, the process further comprising contacting the mass with water and an acid or acid precursor, to solubilize chitosan, the process further comprising separating the solid β-glucan fraction from the liquid that contains the chitosan solution, whereby the separation is by a physical separation method and the process further comprising flocculating or precipitating of chitosan in the chitosan solution, whereby the chitosan solution is contacted by base or a base precursor to neutralization and alkalinisation of the liquid fraction comprising chitosan.

The object of the present invention is in a particular embodiment also achieved by means, of an method for isolation of a chitosan fraction and β-glucan fraction from fungal mass or a mass originating from a fungal mass, comprising heating the fungal mass in contact with water and base or base precursor and subjecting this fungal mass to ultrasound treatment, wherein the base is sodium hydroxide (NaOH), the process further comprising a washing and separation step to remove the dissolved material from the mixture, the process further comprising contacting the mass with water and an acid or acid precursor, wherein the mass is demineralized) (without ultrasound-or microwave-assistance, the process further comprising a washing and separation step to remove the dissolved material from the mixture, the process further comprising contacting the mass with water and a base or base precursor, heating it and subjecting it to microwave treatment, wherein the base is sodium hydroxide (NaOH), the process further comprising contacting the mass with water and an acid or acid precursor, whereby the pH is in the range of 4 to 5, preferably 4.2 to 4.7 and yet more preferably 4.4 to 4.7, the process further comprising separating the solid β-glucan fraction from the liquid that contains the chitosan solution, whereby the separation is by a physical separation method and the process further comprising flocculating or precipitating of chitosan in the chitosan solution, whereby the chitosan solution is contacted by base or a base precursor to neutralization and alkalinisation of the liquid fraction comprising chitosan.

Another aspect of the invention is a method according for isolation of a chitosan fraction and β-glucan fraction from fungal mass or a mass originating from a fungal mass, comprising heating the fungal mass in contact with water and base or base precursor and subjecting this fungal mass to ultrasound treatment, wherein: at a temperature of in the range between 40 to 70°C, the process further comprising a washing and separation step to remove the dissolved material from the mixture, the process further comprising contacting the mass with water and an acid or acid precursor, whereby the temperature is in the range of 20 - 30 °C, more preferably in the range between 23 - 27 °C, the process further comprising a washing and separation step to remove the dissolved material from the mixture, the process further comprising contacting the mass with water and a base or base precursor, heating it and subjecting it to microwave treatment, wherein: at a temperature of in the range of 90°C to 170°C or in the range of 100°C to 160°C, the process further comprising contacting the mass with water and an acid or acid precursor, whereby the acid is acetic acid (CH₃COOH), the process further comprising separating the solid β-glucan fraction from the liquid that contains the chitosan solution, whereby the separation is by centrifugation and/or filtration and the process further comprising flocculating or precipitating of chitosan in the chitosan solution, whereby the liquid fraction comprising chitosan is contacted by a base or a base precursor to achieve a pH in a range between 7 to 8.

Still another aspect of the invention concerns a method for isolation of a chitosan fraction and β-glucan fraction from fungal mass or a mass originating from a fungal mass, comprising
- heating the fungal mass in contact with water and base or base precursor and subjecting this fungal mass to ultrasound treatment, wherein the base is sodium hydroxide (NaOH).
- the process further comprising a washing and separation step to remove the dissolved material from the mixture.
- the process further comprising contacting the mass with water and an acid or acid precursor, to remove mineral fraction from the chitin glucan complex.
- the process further comprising a washing and separation step to remove the dissolved material from the mixture.
- the process further comprising contacting the mass with water and a base or base precursor, heating it and subjecting it to microwave treatment, wherein the base is sodium hydroxide (NaOH).
- the process further comprising contacting the mass with water and an acid or acid precursor, whereby the acid is a weak acid only partially dissociates in solution.
- the process further comprising separating the solid β-glucan fraction from the liquid that contains the chitosan solution.
- the process further comprising flocculating or precipitating of chitosan in the chitosan solution, wherein the base is sodium hydroxide (NaOH).

Still another aspect of the invention concerns a method for isolation of a chitosan fraction and β-glucan fraction from fungal mass or a mass originating from a fungal mass, comprising
- heating the fungal mass in contact with water and base or base precursor and subjecting this fungal mass to ultrasound treatment, wherein the base reacts with protic acids.
- the process further comprising a washing and separation step to remove the dissolved material from the mixture.
- the process further comprising contacting the mass with water and an acid or acid precursor, wherein the acid completely miscible with water.
- the process further comprising a washing and separation step to remove the dissolved material from the mixture.
- the process further comprising contacting the mass with water and a base or base precursor, heating it and subjecting it to microwave treatment, wherein the base reacts with protic acids.
- the process further comprising contacting the mass with water and an acid or acid precursor, whereby the acid is an organic acid.
- the process further comprising separating the solid β-glucan fraction from the liquid that contains the chitosan solution.
- the process further comprising flocculating or precipitating of chitosan in the chitosan solution, wherein the base reacts with protic acids.

Still another aspect of the invention concerns a method for isolation of a chitosan fraction and β-glucan fraction from fungal mass or a mass originating from a fungal mass, comprising
- heating the fungal mass in contact with water and base or base precursor and subjecting this fungal mass to ultrasound treatment, wherein the base reacts with acidic oxides.
- the process further comprising a washing and separation step to remove the dissolved material from the mixture.
- the process further comprising contacting the mass with water and an acid or acid precursor.
- the process further comprising a washing and separation step to remove the dissolved material from the mixture.
- the process further comprising contacting the mass with water and a base or base precursor, heating it and subjecting it to microwave treatment, wherein the base is highly soluble in water for instance above 350 g/L, preferably above 400 g/L at 0 °C.
- the process further comprising contacting the mass with water and an acid or acid precursor, whereby the acid is a hydrophilic (polar) protic solvent.
- the process further comprising separating the solid β-glucan fraction from the liquid that contains the chitosan solution.
- the process further comprising flocculating or precipitating of chitosan in the chitosan solution, wherein the base is highly soluble in water for instance above 350 g/L, preferably above 400 g/L at 0 °C.

Still another aspect of the invention concerns a method for isolation of a chitosan fraction and β-glucan fraction from fungal mass or a mass originating from a fungal mass, comprising
- heating the fungal mass in contact with water and base or base precursor and subjecting this fungal mass to ultrasound treatment, wherein the base is highly soluble in water for instance above 350 g/L, preferably above 400 g/L at 0 °C,
- the process further comprising a washing and separation step to remove the dissolved material from the mixture,
- the process further comprising contacting the mass with water and an acid or acid precursor,
- the process further comprising a washing and separation step to remove the dissolved material from the mixture,
- the process further comprising contacting the mass with water and a base or base precursor, heating it and subjecting it to microwave treatment, wherein the base is an inorganic base),
- the process further comprising contacting the mass with water and an acid or acid precursor, whereby the acid has a moderate relative static permittivity (dielectric constant) of a value between 6 and 6.4,
- the process further comprising separating the solid β-glucan fraction from the liquid that contains the chitosan solution,
- the process further comprising flocculating or precipitating of chitosan in the chitosan solution, wherein the base is an inorganic base.

Still another aspect of the invention concerns a method for isolation of a chitosan fraction and β-glucan fraction from fungal mass or a mass originating from a fungal mass, comprising
- heating the fungal mass in contact with water and base or base precursor and subjecting this fungal mass to ultrasound treatment, wherein the base is an inorganic base.
- the process further comprising a washing and separation step to remove the dissolved material from the mixture.
- the process further comprising contacting the mass with water and an acid or acid precursor.
- the process further comprising a washing and separation step to remove the dissolved material from the mixture.
- the process further comprising contacting the mass with water and a base or base precursor, heating it and subjecting it to microwave treatment, wherein the base is an inorganic base).
- the process further comprising contacting the mass with water and an acid or acid precursor, whereby the acid dissolves polar compounds and non-polar compounds.
- the process further comprising separating the solid β-glucan fraction from the liquid that contains the chitosan solution.
- the process further comprising flocculating or precipitating of chitosan in the chitosan solution, wherein the base is an inorganic base.

Still another aspect of the invention concerns a method for isolation of a chitosan fraction and β-glucan fraction from fungal mass or a mass originating from a fungal mass, comprising
- heating the fungal mass in contact with water and base or base precursor and subjecting this fungal mass to ultrasound treatment, wherein the base is an inorganic base.
- the process further comprising a washing and separation step to remove the dissolved material from the mixture.
- the process further comprising contacting the mass with water and an acid or acid precursor.
- the process further comprising a washing and separation step to remove the dissolved material from the mixture.
- the process further comprising contacting the mass with water and a base or base precursor, heating it and subjecting it to microwave treatment, wherein the base is an inorganic base.
- the process further comprising contacting the mass with water and an acid or acid precursor, whereby the acid dissolves polar compounds and non-polar compounds.
- the process further comprising separating the solid β-glucan fraction from the liquid that contains the chitosan solution.
- the process further comprising flocculating or precipitating of chitosan in the chitosan solution, wherein the base is an inorganic base.

Still another aspect of the invention concerns the isolation of a chitosan fraction and β-glucan fraction from fungal mass or a mass originating from a fungal mass, comprising
- heating the fungal mass in contact with water and base or base precursor and an subjecting this fungal mass to ultrasound treatment, wherein the base is an inorganic base.
- the process further comprising a washing and separation step to remove the dissolved material from the mixture.
- the process further comprising contacting the mass with water and an acid or acid precursor.
- the process further comprising a washing and separation step to remove the dissolved material from the mixture.
- the process further comprising contacting the mass with water and a base or base precursor, heating it and subjecting it to microwave treatment, wherein the base is an inorganic base.
- the process further comprising contacting the mass with water and an acid or acid precursor, whereby the acid is miscible with polar and non-polar solvents.
- the process further comprising separating the solid β-glucan fraction from the liquid that contains the chitosan solution.
- the process further comprising flocculating or precipitating of chitosan in the chitosan solution, wherein the base is an inorganic base.

Still another aspect of the invention concerns a method for isolation of a chitosan fraction and β-glucan fraction from fungal mass or a mass originating from a fungal mass, comprising
- heating the fungal mass in contact with water and base or base precursor and an subjecting this fungal mass to ultrasound treatment, wherein the base is an inorganic base.
- the process further comprising a washing and separation step to remove the dissolved material from the mixture.
- the process further comprising contacting the mass with water and an acid or acid precursor.
- the process further comprising a washing and separation step to remove the dissolved material from the mixture.
- the process further comprising contacting the mass with water and a base or base precursor, heating it and subjecting it to microwave treatment, wherein the base is an inorganic base.
- the process further comprising contacting the mass with water and an acid or acid precursor, whereby the acid is miscible with water.
- the process further comprising separating the solid β-glucan fraction from the liquid that contains the chitosan solution.
- the process further comprising flocculating or precipitating of chitosan in the chitosan solution, wherein the base is an inorganic base.

Still another aspect of the invention concerns a method for isolation of a chitosan fraction and β-glucan fraction from fungal mass or a mass originating from a fungal mass, comprising
the steps of 1) heating the fungal mass in contact with water and base or base precursor and subjecting this fungal mass to ultrasound treatment; 2) washing and separating to remove the dissolved material from the mixture; 3) contacting the mass with water and an acid or acid precursor; 4) washing and separating to remove the dissolved material from the mixture; 5) contacting the mass with water and a base or base precursor, heating it and subjecting it to microwave treatment; 6) contacting the mass with water and an acid or acid precursor; 7) separating the solid β-glucan fraction from the liquid that contains the chitosan solution and 8) flocculating or precipitating of chitosan in the chitosan solution. Eventually in step 8) chitosan in the chitosan solution is flocculated or precipitated by neutralization or alkalinisation of the solution, for instance at a pH in the range of 7-8.

Still another aspect of the invention concerns a method for isolation of a chitosan fraction and β-glucan fraction from fungal mass or a mass originating from a fungal mass further comprises from the dissolved material fraction isolating or separating mycoprotein for instance by dielectric precipitation or by dielectric precipitation, preferably dielectric precipitation at 1 - 1,4 % HNO₃ and room temperature.

The method whereby in step 5) the process is in a pressurized reaction vessel.

In some embodiments, the methods described here above further comprise separating the solid chitosan fraction from the liquid for instance by filtration or by centrifugation or by centrifugation and filtration.

These methods of present invention can be used for fractionating fungal biomass in chitosan and β-glucan.

Some of the techniques described above may be embodied as the ultrasonic treatment of the fungal mass is to a level to disrupt the fungal cell wall component. Some of the techniques described above may be embodied as the microwave-assisted deacetylation with an alkaline concentration lower than 50 w%. Some of the techniques described above may be embodied as the microwave-assisted deacetylation at a reaction time of a range of 30 min to 4 h.

These methods of present invention is particular suitable for obtaining chitosan and β-glucan from mycelium from an *Aspergillus* species, from an *Aspergillus* species biomass and particularly from *Aspergillus niger* biomass.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Detailed Description

### DETAILED DESCRIPTION OF EMBODIMENTS OF THE INVENTION

The following detailed description of the invention refers to the accompanying drawings. The same reference numbers in different drawings identify the same or similar elements. Also, the following detailed description does not limit the invention. Instead, the scope of the invention is defined by the appended claims

The following detailed description of the invention refers to the accompanying drawings. The same reference numbers in different drawings identify the same or similar elements. The scope of the invention is defined by the appended claims Several documents are cited throughout the text of this specification.

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to the devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Other embodiments of the invention will be apparent to those skilled in the art from consideration of the specification and practice of the invention disclosed herein.

It is intended that the specification and examples be considered as exemplary only.

Each and every claim is incorporated into the specification as an embodiment of the present invention. Thus, the claims are part of the description and are a further description and are in addition to the preferred embodiments of the present invention.

Each of the claims set out a particular embodiment of the invention.

The following terms are provided solely to aid in the understanding of the invention.

### Definitions

As used herein, "chitin-glucan complex" (CGC) means a copolymer of chitin (a polymer of N-acetylglucosamine units) covalently linked to β-1,3-glucans (polymers of glucose units).

### EXAMPLES

### Example 1

In a process of present invention extraction and isolation of solid chitosan and solid β-glucan from an *Aspergillus niger* feedstock is carried out.

In a first step the fraction comprising deproteinated CGC (Chitin Glucan Complex) is extracted from the fungal mycelium feedstock via alkaline ultrasonic-assisted extraction which solubilizes the proteins in the feedstock and solubilizes hexacyanoferrate.

The use of ultrasound is highly advantageous over existing methods due to (i) the increase of product uniformity, (ii) the disruption of the complex fungal matrix so that cell wall components (chitin, β-glucan) become more easily extractible, (iii) the improved separability, (iv) less (alkaline) chemical consumption (and thus less waste washing water), (v) energy savings due to lower operating temperatures.

Besides limiting the waste production and energy savings, lower alkaline concentrations allow specifically for *Aspergillus niger,* the valorization of the protein fraction, which is currently discarded in (alkaline) waste streams as they are denaturated at high temperatures and high alkaline concentrations.

A second step is an acid treatment without ultrasound-or microwave-assistance to remove mineral content. Due to the first step, less chemical and energy (lower temperature) consumption is required due to the increased surface area caused by the ultrasound treatment.

A third step involves a microwave-assisted deacetylation of the CGC complex where chitin is converted to chitosan. This is carried out at a high temperature of 130 °C with very high alkaline concentrations of 50 w% NaOH. Other suitable temperatures are in the range of 90 °C to 160 °C and other NaOH concentrations of lower than 50 w% would be suitable. Microwave-assisted deacetylation, however, allows short reactions times with relatively low alkaline concentrations at high temperature which considerably limits energy and chemical consumption (and thus limiting wastewater production). Instead, state of the art deacetylation of the CGC complex would require very long reactions times, for instance of in the range of 10 to 72 h.

The deacetylated Chitosan Glucan Complex is subsequently acidified with acetic acid at pH 4.5, where chitosan will solubilize and β-glucan remains as solid fraction, which can be isolated by a physical separation.

The neutralization and alkalinisation step of the filtrate with NaOH at pH 7 allows the chitosan to precipitate, which can be isolated via mechanical separation.

### Example 2

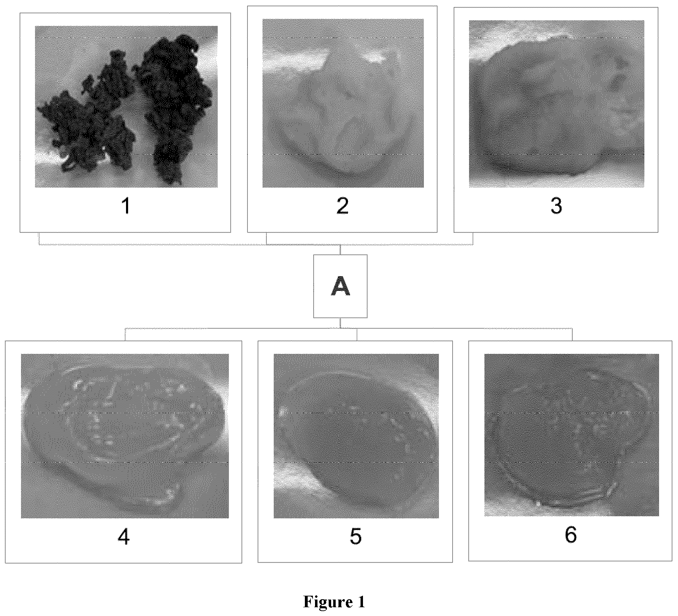

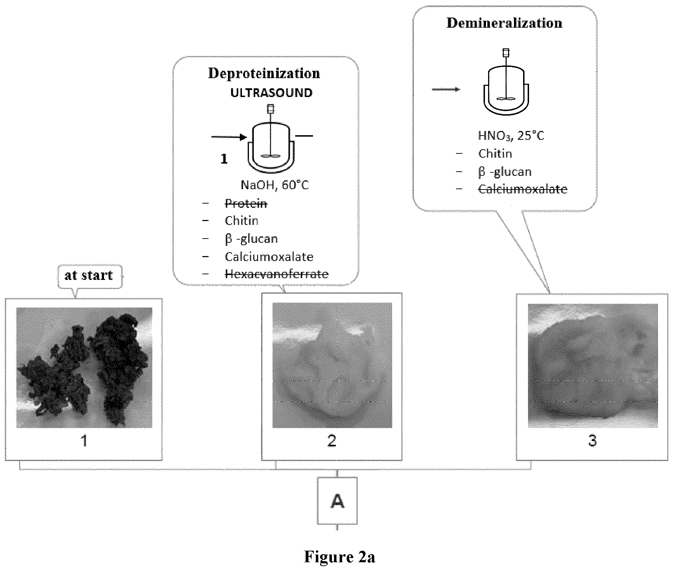

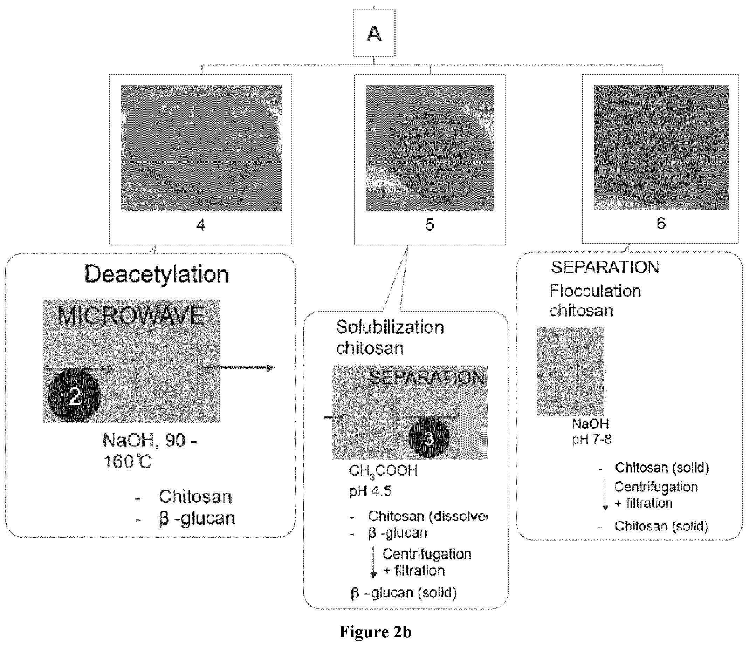

A process of microwave- and ultrasonic-assisted extraction of chitosan and β-glucan from fungi for instance from fungi of the genus *Aspergillus,* and preferably from *Aspergillus niger* is schematically displayed in the figures 1 and the figures 2a and 2b.

Particular and preferred aspects of the invention are set out in the accompanying independent and dependent claims.

Thus, the claims following the detailed description are hereby expressly incorporated into this detailed description, with each claim standing on its own as a separate embodiment of this invention.

### Drawing Description

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a schematic view showing the interim and end products [A] of the process of present invention whereby [1] is fungal mass at start, [2] is a mass of chitin, β-glucan and calciumoxalate, [3] is a mass of chitin and β-glucan, [4] is a mass of chitosan and β-glucan, [5] is a mass of β-glucan at 0.5 m% N and [6] is a mass of chitosan at 6.5 m% N.
FIG. 2a and 2b is a schematic view showing the interim and end products [A] of the process of present invention whereby [1] is fungal mass at start, [2] is a mass of chitin, β-glucan and calciumoxalate, [3] is a mass of chitin and β-glucan, [4] is a mass of chitosan and β-glucan, [5] is a mass of β-glucan at 0.5 m% N and [6] is a mass of chitosan at 6.5 m% N and for each interim or end product the process step where it is derived from.

## Claims

1. A method for isolation of a chitosan fraction and β-glucan fraction from fungal mass or a mass originating from a fungal mass, comprising
a) heating the fungal mass in contact with water and base or base precursor and subjecting this fungal mass to ultrasound treatment.
b) washing and separation step to remove the dissolved material from the mixture or to separate the dissolved material fraction from the mass.
c) contacting the mass with water and an acid or acid precursor.
d) a washing and separation step to remove the dissolved material from the mixture.
e) contacting the mass with water and a base or base precursor, heating it and subjecting it to microwave treatment.
f) contacting the mass with water and an acid or acid precursor, whereby the pH is in the range of 4 to 5.
g) separating the solid β-glucan fraction from the liquid that contains the chitosan solution.
h) Flocculating or precipitating of chitosan in the chitosan solution, whereby the liquid fraction comprising chitosan is contacted by a base or a based precursor to achieve a pH in a range between 7 to 8.

2. The method according to claim 1, comprising
a. heating the fungal mass in contact with water and base or base precursor and subjecting this fungal mass to ultrasound treatment, wherein the mass is heated to a temperature in a range between 40 to 70°C.
b. a washing and separation step to remove the dissolved material from the mixture.
c. contacting the mass with water and an acid or acid precursor to remove mineral fraction from the chitin glucan complex.
d. a washing and separation step to remove the dissolved material from the mixture.
e. contacting the mass with water and a base or base precursor, heating it and subjecting it to microwave treatment, wherein microwave-assisted deacetylation converts chitin to chitosan.
f. contacting the mass with water and an acid or acid precursor, to solubilize chitosan.
g. separating the solid β-glucan fraction from the liquid that contains the chitosan solution, whereby the separation is by a physical separation method.
h. flocculating or precipitating of chitosan in the chitosan solution, whereby the chitosan solution is contacted by base or a base precursor.

3. The method according to claim 1, comprising
a. heating the fungal mass in contact with water and base or base precursor and subjecting this fungal mass to ultrasound treatment, wherein the base is sodium hydroxide (NaOH).
b. a washing and separation step to remove the dissolved material from the mixture.
c. contacting the mass with water and an acid or acid precursor, wherein the mass is demineralized without ultrasound-or microwave-assistance.
d. a washing and separation step to remove the dissolved material from the mixture.
e. contacting the mass with water and a base or base precursor, heating it and subjecting it to microwave treatment, wherein the base is sodium hydroxide (NaOH).
f. contacting the mass with water and an acid or acid precursor, whereby the pH is in the range of 4 to 5.
g. separating the solid β-glucan fraction from the liquid that contains the chitosan solution, whereby the separation is by a physical separation method.
h. flocculating or precipitating of chitosan in the chitosan solution, whereby the chitosan solution is contacted by base or a base precursor to neutralization and alkalinisation of the liquid fraction comprising chitosan.

4. The method according to claim 1, comprising
a. heating the fungal mass in contact with water and base or base precursor and subjecting this fungal mass to ultrasound treatment, wherein: at a temperature of in the range between 40 to 70°C.
b. a washing and separation step to remove the dissolved material from the mixture.
c. contacting the mass with water and an acid or acid precursor, whereby the temperature is in the range of 20 - 30°C, more preferably in the range between 23 - 27 °C.
d. a washing and separation step to remove the dissolved material from the mixture.
e. contacting the mass with water and a base or base precursor, heating it and subjecting it to microwave treatment, wherein: at a temperature of in the range of 90°C to 170°C or in the range of 100°C to 160°C.
f. contacting the mass with water and an acid or acid precursor, whereby the acid is acetic acid (CH₃COOH).
g. the process further comprising separating the solid β-glucan fraction from the liquid that contains the chitosan solution, whereby the separation is by centrifugation and/or filtration.
h. the process further comprising flocculating or precipitating of chitosan in the chitosan solution, whereby the liquid fraction comprising chitosan is contacted by a base or a base precursor to achieve a pH in a range between 7 to 8.

5. The method according to claim 1, comprising
a. heating the fungal mass in contact with water and base or base precursor and subjecting this fungal mass to ultrasound treatment, wherein the base is sodium hydroxide (NaOH).
b. a washing and separation step to remove the dissolved material from the mixture.
c. contacting the mass with water and an acid or acid precursor, to remove mineral fraction from the chitin glucan complex.
d. a washing and separation step to remove the dissolved material from the mixture.
e. contacting the mass with water and a base or base precursor, heating it and subjecting it to microwave treatment, wherein the base is sodium hydroxide (NaOH).
f. contacting the mass with water and an acid or acid precursor, whereby the acid is a weak acid only partially dissociates in solution.
g. separating the solid β-glucan fraction from the liquid that contains the chitosan solution.
h. flocculating or precipitating of chitosan in the chitosan solution, wherein the base is sodium hydroxide (NaOH).

6. The method according to claim 1, comprising
a. heating the fungal mass in contact with water and base or base precursor and subjecting this fungal mass to ultrasound treatment, wherein the base reacts with protic acids.
b. a washing and separation step to remove the dissolved material from the mixture.
c. contacting the mass with water and an acid or acid precursor, wherein the acid completely miscible with water.
d. a washing and separation step to remove the dissolved material from the mixture.
e. contacting the mass with water and a base or base precursor, heating it and subjecting it to microwave treatment, wherein the base reacts with protic acids.
f. contacting the mass with water and an acid or acid precursor, whereby the acid is an organic acid.
g. separating the solid β-glucan fraction from the liquid that contains the chitosan solution.
h. flocculating or precipitating of chitosan in the chitosan solution, wherein the base reacts with protic acids.

7. The method according to claim 1, comprising
a. heating the fungal mass in contact with water and base or base precursor and subjecting this fungal mass to ultrasound treatment, wherein the base reacts with acidic oxides.
b. a washing and separation step to remove the dissolved material from the mixture.
c. contacting the mass with water and an acid or acid precursor.
d. a washing and separation step to remove the dissolved material from the mixture.
e. contacting the mass with water and a base or base precursor, heating it and subjecting it to microwave treatment, wherein the base is highly soluble in water for instance above 350 g/L, preferably above 400 g/L at 0 °C.
f. contacting the mass with water and an acid or acid precursor, whereby the acid is a hydrophilic (polar) protic solvent.
g. separating the solid β-glucan fraction from the liquid that contains the chitosan solution.
h. flocculating or precipitating of chitosan in the chitosan solution, wherein the base is highly soluble in water for instance above 350 g/L, preferably above 400 g/L at 0 °C.

8. The method according to claim 1, comprising
a. heating the fungal mass in contact with water and base or base precursor and subjecting this fungal mass to ultrasound treatment, wherein the base is highly soluble in water for instance above 350 g/L, preferably above 400 g/L at 0 °C.
b. a washing and separation step to remove the dissolved material from the mixture.
c. contacting the mass with water and an acid or acid precursor.
d. a washing and separation step to remove the dissolved material from the mixture.
e. contacting the mass with water and a base or base precursor, heating it and subjecting it to microwave treatment, wherein the base is an inorganic base.
f. contacting the mass with water and an acid or acid precursor, whereby the acid has a moderate relative static permittivity (dielectric constant) of a value between 6 and 6.4.
g. separating the solid β-glucan fraction from the liquid that contains the chitosan solution.
h. flocculating or precipitating of chitosan in the chitosan solution, wherein the base is an inorganic base.

9. The method according to claim 1, comprising
a. heating the fungal mass in contact with water and base or base precursor and subjecting this fungal mass to ultrasound treatment, wherein the base is an inorganic base.
b. a washing and separation step to remove the dissolved material from the mixture.
c. contacting the mass with water and an acid or acid precursor.
d. a washing and separation step to remove the dissolved material from the mixture.
e. contacting the mass with water and a base or base precursor, heating it and subjecting it to microwave treatment, wherein the base is an inorganic base).
f. contacting the mass with water and an acid or acid precursor, whereby the acid dissolves polar compounds and non-polar compounds.
g. separating the solid β-glucan fraction from the liquid that contains the chitosan solution.
h. flocculating or precipitating of chitosan in the chitosan solution, wherein the base is an inorganic base.

10. The method according to claim 1, comprising
a. heating the fungal mass in contact with water and base or base precursor and subjecting this fungal mass to ultrasound treatment, wherein the base is an inorganic base.
b. a washing and separation step to remove the dissolved material from the mixture.
c. contacting the mass with water and an acid or acid precursor.
d. a washing and separation step to remove the dissolved material from the mixture.
e. contacting the mass with water and a base or base precursor, heating it and subjecting it to microwave treatment, wherein the base is an inorganic base.
f. contacting the mass with water and an acid or acid precursor, whereby the acid dissolves polar compounds and non-polar compounds.
g. separating the solid β-glucan fraction from the liquid that contains the chitosan solution.
h. flocculating or precipitating of chitosan in the chitosan solution, wherein the base is an inorganic base.

11. The method according to claim 1, comprising
a. heating the fungal mass in contact with water and base or base precursor and an subjecting this fungal mass to ultrasound treatment, wherein the base is an inorganic base.
b. a washing and separation step to remove the dissolved material from the mixture.
c. contacting the mass with water and an acid or acid precursor.
d. a washing and separation step to remove the dissolved material from the mixture.
e. contacting the mass with water and a base or base precursor, heating it and subjecting it to microwave treatment, wherein the base is an inorganic base.
f. contacting the mass with water and an acid or acid precursor, whereby the acid is miscible with polar and non-polar solvents.
g. separating the solid β-glucan fraction from the liquid that contains the chitosan solution.
h. flocculating or precipitating of chitosan in the chitosan solution, wherein the base is an inorganic base.

12. The method according to claim 1, comprising
a. heating the fungal mass in contact with water and base or base precursor and an subjecting this fungal mass to ultrasound treatment, wherein the base is an inorganic base.
b. a washing and separation step to remove the dissolved material from the mixture.
c. contacting the mass with water and an acid or acid precursor.
d. a washing and separation step to remove the dissolved material from the mixture.
e. contacting the mass with water and a base or base precursor, heating it and subjecting it to microwave treatment, wherein the base is an inorganic base.
f. contacting the mass with water and an acid or acid precursor, whereby the acid is miscible with water.
g. separating the solid β-glucan fraction from the liquid that contains the chitosan solution.
h. flocculating or precipitating of chitosan in the chitosan solution, wherein the base is an inorganic base.

13. The method according to any one of the previous claims 1 to 12, the process further comprising separating the solid chitosan fraction from the liquid

14. The method according to any one of the previous claims 1 to 12, the process further comprising separating the solid chitosan fraction from the liquid, whereby the separation is by filtration.

15. The method according to any one of the previous claims 1 to 12, the process further comprising separating the solid chitosan fraction from the liquid, whereby the separation is by centrifugation.

## Patentansprüche

1. Verfahren zum Isolieren einer Chitosan-Fraktion und β-Glucan-Fraktion von einer Pilzmasse oder einer von einer Pilzmasse stammenden Masse, umfassend
a) Erhitzen der Pilzmasse in Kontakt mit Wasser und einer Base oder einem Basenvorläufer und Unterwerfen dieser Pilzmasse einer Ultraschallbehandlung,
b) einen Wasch- und Trennschritt zum Entfernen des gelösten Materials von der Mischung oder zum Trennen der gelösten Materialfraktion von der Masse.
c) Inkontaktbringen der Masse mit Wasser und einer Säure oder einem Säurevorläufer.
d) einen Wasch- und Trennschritt zum Entfernen des gelösten Materials von der Mischung.
e) Inkontaktbringen der Masse mit Wasser und einer Base oder einem Basenvorläufer, Erhitzen derselben und Unterwerfen derselben einer Mikrowellenbehandlung.
f) Inkontaktbringen der Masse mit Wasser und einer Säure oder einem Säurevorläufer, wobei der pH-Wert im Bereich von 4 bis 5 liegt.
g) Trennen der festen β-Glucan-Fraktion von der Flüssigkeit, die die Chitosanlösung enthält.
h) Ausflocken oder Ausfällen von Chitosan in der Chitosanlösung, wobei die flüssige Fraktion, die Chitosan umfasst, mit einer Base oder einem basischen Vorläufer in Kontakt gebracht wird, um einen pH-Wert in einem Bereich zwischen 7 und 8 zu erreichen.

2. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Masse auf eine Temperatur im Bereich zwischen 40 bis 70 °C erhitzt wird.
b. einen Wasch- und Trennschritt zum Entfernen des gelösten Materials von der Mischung.
c. Inkontaktbringen der Masse mit Wasser und einer Säure oder einem Säurevorläufer, um die Mineralfraktion von dem Chitin-Glucan-Komplex zu entfernen.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei durch mikrowellenunterstützte Deacetylierung Chitin in Chitosan umgewandelt wird.
f. Inkontaktbringen der Masse mit Wasser und einer Säure oder einem Säurevorläufer, um Chitosan löslich zu machen.
g. Trennen der festen β-Glucan-Fraktion von der Flüssigkeit, die die Chitosan-Lösung enthält, wobei die Trennung durch ein physikalisches Trennverfahren erfolgt.
h. Ausflocken oder Ausfällen von Chitosan in der Chitosanlösung, wobei die Chitosanlösung mit einer Base oder einem Basenvorläufer in Kontaktiert gebracht wird.

3. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base Natriumhydroxid (NaOH) ist.
b. einen Wasch- und Trennschritt zum Entfernen des gelösten Materials von der Mischung.
c. Inkontaktbringen der Masse mit Wasser und einer Säure oder einem Säurevorläufer, wobei die Masse ohne Ultraschall- oder Mikrowellenunterstützung entmineralisiert wird.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base Natriumhydroxid (NaOH) ist.
f. Inkontaktbringen der Masse mit Wasser und einer Säure oder einem Säurevorläufer, wobei der pH-Wert im Bereich von 4 bis 5 liegt.
g. Trennen der festen β-Glucan-Fraktion von der Flüssigkeit, die die Chitosanlösung enthält, wobei die Trennung durch ein physikalisches Trennverfahren erfolgt.
h. Ausflocken oder Ausfällen von Chitosan in der Chitosanlösung, wodurch die Chitosanlösung mit einer Base oder einem Basenvorläufer zum Neutralisieren und Alkalisieren der flüssigen Fraktion, die Chitosan umfasst, in Kontakt gebracht wird.

4. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei: bei einer Temperatur im Bereich zwischen 40 bis 70 °C.
b. einen Wasch- und Trennschritt zum Entfernen des gelösten Materials von der Mischung.
c. Inkontaktbringen der Masse mit Wasser und einer Säure oder einem Säurevorläufer, wobei die Temperatur im Bereich von 20 - 30 °C, noch bevorzugter im Bereich zwischen 23 - 27 °C liegt.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei: bei einer Temperatur im Bereich von 90 °C bis 170 °C oder im Bereich von 100 °C bis 160°C.
f. Inkontaktbringen der Masse mit Wasser und einer Säure oder einem Säurevorläufer, wobei die Säure Essigsäure (CH₃COOH) ist.
g. Verfahren, das ferner das Trennen der festen β-Glucan-Fraktion von der Flüssigkeit, die die Chitosanlösung enthält, umfasst, wobei das Trennen durch Zentrifugieren und/oder Filtrieren erfolgt.
h. wobei das Verfahren ferner das Ausflocken oder Ausfällen von Chitosan in der Chitosanlösung umfasst, wobei die flüssige Fraktion, die Chitosan umfasst, mit einer Base oder einem Basenvorläufer in Kontakt gebracht wird, um einen pH-Wert in einem Bereich zwischen 7 und 8 zu erreichen

5. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base Natriumhydroxid (NaOH) ist.
b. einen Wasch- und Trennschritt zum Entfernen des gelösten Materials von der Mischung.
c. Inkontaktbringen der Masse mit Wasser und einer Säure oder einem Säurevorläufer zum Entfernen der Mineral-Fraktion von dem Chitin -Glucan-Komplex.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base Natriumhydroxid (NaOH) ist.
f. Inkontaktbringen der Masse mit Wasser und einer Säure oder einem Säurevorläufer, wobei die Säure eine schwache Säure ist, die in Lösung sich nur teilweise dissoziiert.
g. Trennen der festen β-Glucan-Fraktion von der Flüssigkeit, die die Chitosanlösung enthält.
h. Ausflocken oder Ausfällen von Chitosan in der Chitosanlösung, wobei die Base Natriumhydrooxid (NaOH) ist.

6. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base mit protischen Säuren reagiert.
b. einen Wasch- und Trennschritt zum Entfernen des gelösten Materials von der Mischung.
c. Inkontaktbringen der Masse mit Wasser und einer Säure oder einem Säurevorläufer, wobei die Säure mit Wasser vollständig mischbar ist.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base mit protischen Säuren reagiert.
f. Inkontaktbringen der Masse mit Wasser und einer Säure oder einem Säurevorläufer, wobei die Säure eine organische Säure ist.
g. Trennen der festen β-Glucan-Fraktion von der Flüssigkeit, die die Chitosanlösung enthält.
h. Ausflocken oder Ausfällen von Chitosan in der Chitosanlösung, wobei die Base mit protischen Säuren reagiert.

7. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base mit sauren Oxiden reagiert.
b. einen Wasch- und Trennschritt zum Entfernen des gelösten Materials von der Mischung.
c. Inkontaktbringen der Masse mit Wasser und einer Säure oder einem Säurevorläufer.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base in Wasser stark, beispielsweise mehr als 350 g/l, bevorzugt mehr als 400 g/l bei 0 °C löslich ist.
f. Inkontaktbringen der Masse mit Wasser und einer Säure oder einem Säurevorläufer, wobei die Säure ein hydrophiles (polares) protisches Lösungsmittel ist.
g. Trennen der festen β-Glucan-Fraktion von der Flüssigkeit, die die Chitosanlösung enthält..
h. Ausflocken oder Ausfällen von Chitosan in der Chitosanlösung, wobei die Base in Wasser stark, beispielsweise mehr als 350 g/l, bevorzugt mehr als 400 g/l bei 0 °C löslich ist.

8. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base in Wasser stark, beispielsweise mehr als 350 g/l, bevorzugt mehr als 400 g/l bei 0 °C löslich ist.
b. einen Wasch- und Trennschritt zum Entfernen des gelösten Materials von der Mischung.
c. Inkontaktbringen der Masse mit Wasser und einer Säure oder einem Säurevorläufer.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base eine anorganische Base ist.
f. Inkontaktbringen der Masse mit Wasser und einer Säure oder einem Säurevorläufer, wobei die Säure eine mäßige relative statische Permittivität (Dielektrizitätskonstante) eines Werts zwischen 6 und 6,4 aufweist.
g. Trennen der festen β-Glucan-Fraktion von der Flüssigkeit, die die Chitosanlösung enthält.
h. Ausflocken oder Ausfällen von Chitosan in der Chitosanlösung, wobei die Base eine anorganische Base ist.

9. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base eine anorganische Base ist.
b. einen Wasch- und Trennschritt zum Entfernen des gelösten Materials von der Mischung.
c. Inkontaktbringen der Masse mit Wasser und einer Säure oder einem Säurevorläufer.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base eine anorganische Base ist.
f. Inkontaktbringen der Masse mit Wasser und einer Säure oder einem Säurevorläufer, wobei die Säure polare Verbindungen und nichtpolare Verbindungen löst.
g. Trennen der festen β-Glucan-Fraktion von der Flüssigkeit, die die Chitosanlösung enthält.
h. Ausflocken oder Ausfällen von Chitosan in der Chitosanlösung, wobei die Base eine anorganische Base ist.

10. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base eine anorganische Base ist.
b. einen Wasch- und Trennschritt zum Entfernen des gelösten Materials von der Mischung.
c. Inkontaktbringen der Masse mit Wasser und einer Säure oder einem Säurevorläufer.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base eine anorganische Base ist.
f. Inkontaktbringen der Masse mit Wasser und einer Säure oder einem Säurevorläufer, wobei die Säure polare Verbindungen und nichtpolare Verbindungen löst.
g. Trennen der festen β-Glucan-Fraktion von der Flüssigkeit, die die Chitosanlösung enthält.
h. Ausflocken oder Ausfällen von Chitosan in der Chitosanlösung, wobei die Base eine anorganische Base ist

11. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base eine anorganische Base ist.
b. einen Wasch- und Trennschritt zum Entfernen des gelösten Materials von der Mischung.
c. Inkontaktbringen der Masse mit Wasser und einer Säure oder einem Säurevorläufer.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base eine anorganische Base ist.
f. Inkontaktbringen der Masse mit Wasser und einer Säure oder einem Säurevorläufer, wobei die Säure mit polaren und nichtpolaren Lösungsmitteln mischbar.
g. Trennen der festen β-Glucan-Fraktion von der Flüssigkeit, die die Chitosanlösung enthält.
h. Ausflocken oder Ausfällen von Chitosan in der Chitosanlösung, wobei die Base eine anorganische Base ist.

12. Verfahren nach Anspruch 1, umfassend
a. Erhitzen der Pilzmasse in Kontakt mit Wasser und einer Base oder einem Basenvorläufer und Unterwerfen dieser Pilzmasse einer Ultraschallbehandlung, wobei die Base eine anorganische Base ist.
b. einen Wasch- und Trennschritt zum Entfernen des gelösten Materials von der Mischung.
c. Inkontaktbringen der Masse mit Wasser und einer Säure oder einem Säurevorläufer.
d. einen Wasch- und Trennschritt zum Entfernen des gelösten Materials von der Mischung.
e. Inkontaktbringen der Masse mit Wasser und einer Base oder einem Basenvorläufer, Erhitzen derselben und Unterwerfen derselben einer Mikrowellenbehandlung, wobei die Base eine anorganische Base ist.
f. Inkontaktbringen der Masse mit Wasser und einer Säure oder einem Säurevorläufer, wobei die Säure mit Wasser mischbar ist.
g. Trennen der festen β-Glucan-Fraktion von der Flüssigkeit, die die Chitosanlösung enthält.
h. Ausflocken oder Ausfällen von Chitosan in der Chitosanlösung, wobei die Base eine anorganische Base ist.

13. Verfahren nach einem der vorhergehenden Ansprüche 1 bis 12, wobei das Verfahren ferner das Trennen der festen Chitosan-Fraktion von der Flüssigkeit umfasst.

14. Verfahren nach einem der vorhergehenden Ansprüche 1 bis 12, wobei das Verfahren ferner das Trennen der festen Chitosan-Fraktion von der Flüssigkeit umfasst, wobei das Trennen durch Filtrieren erfolgt.

15. Verfahren nach einem der vorhergehenden Ansprüche 1 bis 12, wobei das Verfahren ferner das Trennen der festen Chitosan-Fraktion von der Flüssigkeit umfasst, bei das Trennen durch Zentrifugieren erfolgt.

## Revendications

1. Procédé d'isolement d'une fraction de chitosane et d'une fraction de β-glucane à partir d'une masse fongique ou d'une masse provenant d'une masse fongique, comprenant :
a) le chauffage de la masse fongique en contact avec de l'eau et une base ou un précurseur de base et la soumission de cette masse fongique à un traitement par ultrasons.
b) une de lavage et de séparation pour éliminer la matière dissoute du mélange ou pour séparer la fraction de matière dissoute de la masse.
c) la mise en contact de la masse avec de l'eau et un acide ou un précurseur d'acide.
d) une étape de lavage et de séparation pour éliminer la matière dissoute du mélange.
e) la mise en contact de la masse avec de l'eau et une base ou un précurseur de base, son chauffage et sa soumission à un traitement par micro-ondes.
f) la mise en contact de la masse avec de l'eau et un acide ou un précurseur d'acide, de sorte que le pH soit dans la plage de 4 à 5.
g) la séparation de la fraction solide de β-glucane du liquide qui contient la solution de chitosane.
h) la floculation ou la précipitation du chitosane dans la solution de chitosane, de sorte que la fraction de liquide comprenant du chitosane soit mise en contact avec une base ou un précurseur de base pour obtenir un pH dans une plage de 7 à 8.

2. Procédé selon la revendication 1, comprenant :
a. le chauffage de la masse fongique en contact avec de l'eau et une base ou un précurseur de base et la soumission de cette masse fongique à un traitement par ultrasons, dans lequel la masse est chauffée à une température dans une plage de 40 à 70 °C.
b. une étape de lavage et de séparation pour éliminer la matière dissoute du mélange.
c. la mise en contact de la masse avec de l'eau et un acide ou un précurseur d'acide pour éliminer la fraction minérale du complexe chitine-glucane.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel une désacétylation assistée par micro-ondes transforme la chitine en chitosane.
f. la mise en contact de la masse avec de l'eau et un acide ou un précurseur d'acide, pour solubiliser le chitosane.
g. la séparation de la fraction solide de β-glucane du liquide qui contient la solution de chitosane, de sorte que la séparation est effectuée par un procédé de séparation physique.
h. la floculation ou la précipitation du chitosane dans la solution de chitosane, de sorte que la solution de chitosane est mise en contact avec une base ou un précurseur de base.

3. Procédé selon la revendication 1, comprenant :
a. le chauffage de la masse fongique en contact avec de l'eau et une base ou un précurseur de base et la soumission de cette masse fongique à un traitement par ultrasons, dans lequel la base est de l'hydroxyde de sodium (NaOH).
b. une étape de lavage et de séparation pour éliminer la matière dissoute du mélange.
c. la mise en contact de la masse fongique avec de l'eau et un acide ou un précurseur d'acide, dans lequel la masse est déminéralisée sans assistance par ultrasons ou micro-ondes.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est de l'hydroxyde de sodium (NaOH).
f. la mise en contact de la masse avec de l'eau et un acide ou un précurseur d'acide, dans lequel le pH est dans la plage de 4 à 5.
g. la séparation de la fraction solide de β-glucane du liquide qui contient la solution de chitosane, de sorte que la séparation s'effectue par un procédé de séparation physique.
h. la floculation ou la précipitation de chitosane dans la solution de chitosane, de sorte que la solution de chitosane est mise en contact avec une base ou un précurseur de base pour la neutralisation et l'alcalinisation de la fraction liquide comprenant le chitosane.

4. Procédé selon la revendication 1, comprenant :
a. le chauffage de la masse fongique en contact avec de l'eau et une base ou un précurseur de base et la soumission de cette masse fongique à un traitement par ultrasons, à une température dans la plage de 40 à 70 °C.
b. une étape de lavage et de séparation pour éliminer la matière dissoute du mélange.
c. la mise en contact de la masse avec de l'eau et un acide ou un précurseur d'acide, dans lequel la température est dans la plage de 20 à 30 °C, plus de préférence dans la plage de 23 à 27 °C.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, à une température dans la plage de 90 °C à 170 °C ou dans la plage de 100 °C à 160 °C.
f. la mise en contact de la masse avec de l'eau et un acide ou un précurseur d'acide, de sorte que l'acide est de l'acide acétique (CH₃COOH).
g. le processus comprenant en outre la séparation de la fraction solide de β-glucane du liquide qui contient la solution de chitosane, de sorte que la séparation s'effectue par centrifugation et/ou filtration.
h. le processus comprenant en outre la floculation ou la précipitation de chitosane dans la solution de chitosane, de sorte que la fraction liquide comprenant du chitosane est mise en contact avec une base ou un précurseur de base pour obtenir un pH dans une plage de 7 à 8.

5. Procédé selon la revendication 1, comprenant :
a. le chauffage de la masse fongique en contact avec de l'eau et une base ou un précurseur de base et la soumission de cette masse fongique à un traitement par ultrasons, dans lequel la base est de l'hydroxyde de sodium (NaOH).
b. une étape de lavage et de séparation pour éliminer la matière dissoute du mélange.
c. la mise en contact de la masse avec de l'eau et un acide ou un précurseur d'acide, pour éliminer la fraction minérale du complexe chitine-glucane.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, la base étant de l'hydroxyde de sodium (NaOH).
f. la mise en contact de la masse avec de l'eau et un acide ou un précurseur d'acide, de sorte que l'acide est un acide faible qui se dissocie seulement partiellement en solution.
g. la séparation de la fraction solide de β-glucane du liquide qui contient la solution de chitosane.
h. la floculation ou la précipitation du chitosane dans la solution de chitosane, dans lequel la base est de l'hydroxyde de sodium (NaOH).

6. Procédé selon la revendication 1, comprenant :
a. le chauffage de la masse fongique en contact avec de l'eau et une base ou un précurseur de base et la soumission de cette masse fongique à un traitement par ultrasons, dans lequel la base réagit avec des acides protiques.
b. une étape de lavage et de séparation pour éliminer la matière dissoute du mélange.
c. la mise en contact de la masse avec de l'eau et un acide ou un précurseur d'acide, dans lequel l'acide est complètement miscible avec de l'eau.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base réagit avec des acides protiques.
f. la mise en contact de la masse avec de l'eau et un acide ou un précurseur d'acide, dans lequel l'acide est un acide organique.
g. la séparation de la fraction solide de β-glucane du liquide qui contient la solution de chitosane.
h. la floculation ou la précipitation de chitosane dans la solution de chitosane, dans lequel la base réagit avec des acides protiques.

7. Procédé selon la revendication 1, comprenant :
a. le chauffage de la masse fongique en contact avec de l'eau et une base ou un précurseur de base et la soumission de cette masse fongique à un traitement par ultrasons, dans lequel la base réagit avec des oxydes acides.
b. une étape de lavage et de séparation pour éliminer la matière dissoute du mélange.
c. la mise en contact de la masse avec de l'eau et un acide ou un précurseur d'acide.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est hautement soluble dans de l'eau, par exemple au-dessus de 350 g/l, de préférence au-dessus de 400 g/l à 0 °C.
f. la mise en contact de la masse avec de l'eau et un acide ou un précurseur d'acide, dans lequel l'acide est un solvant protique hydrophile (polaire).
g. la séparation de la fraction solide de β-glucane du liquide qui contient la solution de chitosane.
h. la floculation ou la précipitation du chitosane dans la solution de chitosane, dans lequel la base est hautement soluble dans l'eau, par exemple au-dessus de 350 g/l, de préférence au-dessus de 400 g/l à 0 °C.

8. Procédé selon la revendication 1, comprenant :
a. le chauffage de la masse fongique en contact avec de l'eau et une base ou un précurseur de base et la soumission de cette masse fongique à un traitement par ultrasons, dans lequel la base est hautement soluble dans l'eau, par exemple au-dessus de 350 g/l, de préférence au-dessus de 400 g/l à 0 °C.
b. une étape de lavage et de séparation pour éliminer la matière dissoute du mélange.
c. la mise en contact de la masse avec de l'eau et un acide ou un précurseur d'acide.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est une base inorganique.
f. la mise en contact de la masse avec de l'eau et un acide ou un précurseur d'acide, dans lequel l'acide a une permittivité relative statique (constante diélectrique) modérée, d'une valeur entre 6 et 6,4.
g. la séparation de la fraction solide de β-glucane du liquide qui contient la solution de chitosane.
h. la floculation ou la précipitation de chitosane dans la solution de chitosane, dans lequel la base est une base inorganique.

9. Procédé selon la revendication 1, comprenant :
a. le chauffage de la masse fongique en contact avec de l'eau et une base ou un précurseur de base et la soumission de cette masse fongique à un traitement par ultrasons, dans lequel la base est une base inorganique.
b. une étape de lavage et de séparation pour éliminer la matière dissoute du mélange.
c. la mise en contact de la masse avec de l'eau et un acide ou un précurseur d'acide.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est une base inorganique.
f. la mise en contact de la masse avec de l'eau et un acide ou un précurseur d'acide, dans lequel l'acide dissout des composés polaires et des composés non polaires.
g. la séparation de la fraction solide de β-glucane du liquide qui contient la solution de chitosane.
h. la floculation ou la précipitation du chitosane dans la solution de chitosane, dans lequel la base est une base inorganique.

10. Procédé selon la revendication 1, comprenant :
a. le chauffage de la masse fongique en contact avec de l'eau et une base ou un précurseur de base et la soumission de cette masse fongique à un traitement par ultrasons, dans lequel la base est une base inorganique.
b. une étape de lavage et de séparation pour éliminer la matière dissoute du mélange.
c. la mise en contact de la masse avec de l'eau et un acide ou un précurseur d'acide.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est une base inorganique.
f. la mise en contact de la masse avec de l'eau et un acide ou un précurseur d'acide, dans lequel l'acide dissout des composés polaires et des composés non polaires.
g. la séparation de la fraction solide de β-glucane du liquide qui contient la solution de chitosane.
h. la floculation ou la précipitation de chitosane dans la solution de chitosane, dans lequel la base est une base inorganique.

11. Procédé selon la revendication 1, comprenant :
a. le chauffage de la masse fongique en contact avec de l'eau et une base ou un précurseur de base et la soumission de cette masse fongique à un traitement par ultrasons, dans lequel la base est une base inorganique.
b. une étape de lavage et de séparation pour éliminer la matière dissoute du mélange.
c. la mise en contact de la masse avec de l'eau et un acide ou un précurseur d'acide.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est une base inorganique.
f. la mise en contact de la masse avec de l'eau et un acide ou un précurseur d'acide, dans lequel l'acide est miscible avec des solvants polaires et non polaires.
g. la séparation de la fraction solide de β-glucane du liquide qui contient la solution de chitosane.
h. la floculation ou la précipitation de chitosane dans la solution de chitosane, dans lequel la base est une base inorganique.

12. Procédé selon la revendication 1, comprenant :
a. le chauffage de la masse fongique en contact avec de l'eau et une base ou un précurseur de base et la soumission de cette masse fongique à un traitement par ultrasons, dans lequel la base est une base inorganique.
b. une étape de lavage et de séparation pour éliminer la matière dissoute du mélange.
c. la mise en contact de la masse avec de l'eau et un acide ou un précurseur d'acide.
d. une étape de lavage et de séparation pour éliminer la matière dissoute du mélange.
e. la mise en contact de la masse avec de l'eau et une base ou un précurseur de base, son chauffage et sa soumission à un traitement par micro-ondes, dans lequel la base est une base inorganique.
f. la mise en contact de la masse avec de l'eau et un acide ou un précurseur d'acide, dans lequel l'acide est miscible avec de l'eau.
g. la séparation de la fraction solide de β-glucane du liquide qui contient la solution de chitosane.
h. la floculation ou la précipitation du chitosane dans la solution de chitosane, dans lequel la base est une base inorganique.

13. Procédé selon l'une quelconque des revendications précédentes 1 à 12, le processus comprenant en outre la séparation de la fraction solide de chitosane du liquide.

14. Procédé selon l'une quelconque des revendications précédentes 1 à 12, le processus comprenant en outre la séparation de la fraction solide de chitosane du liquide, de sorte que la séparation s'effectue par filtration.

15. Procédé selon l'une quelconque des revendications précédentes 1 à 12, le processus comprenant en outre la séparation de la fraction solide de chitosane du liquide, de sorte que la séparation s'effectue par centrifugation.
